# EUROPÄISCHE PATENTSCHRIFT

(11) **EP 0 609 490 B1**
(45) Veröffentlichungstag und Bekanntmachung des Hinweises auf die Patenterteilung: **24.04.1996**
(21) Anmeldenummer: 93114380.4
(22) Anmeldetag: 08.09.1993
(51) Int. Cl.: F16C 33/20

(54) **Verfahren zur Herstellung einer Führungshülse**
Method of manufacturing a guide bush
Procédé de fabrication d'une douille de guidage

(30) Priorität: 04.02.1993 DE 4303177
(43) Veröffentlichungstag der Anmeldung: 10.08.1994
(73) Patentinhaber: Firma Carl Freudenberg, D-69469 Weinheim (DE)
(72) Erfinder: Emig, Jürgen Karl, D-64689 Grasellenbach (DE); Renner, Horst, D-69489 Weschnitz (DE)

(56) Entgegenhaltungen:
- EP-A- 0 327 012
- BE-A- 415 295
- US-A- 2 981 573
- US-A- 4 509 870
- PATENT ABSTRACTS OF JAPAN vol. 6, no. 134 (M-144) (1012) 21. Juli 1982 & JP-A-57 057 921 (NTN TOYO BEARING K.K.) 7. April 1982
- PATENT ABSTRACTS OF JAPAN vol. 11, no. 368 (M-647) (2815) 2. Dezember 1987 & JP-A-62 141 311 (DAINIPPON PRINTING CO LTD) 24. Juni 1987

## Beschreibung

Die Erfindung betrifft ein Verfahren zur Herstellung einer Führungshülse für eine parallel zu der Achse relativ bewegliche Stange oder Welle, umfassend einen Außenring und einen darin eingesetzten Führungsring aus Kunststoff, wobei der Außen- und der Führungsring aneinander festgelegt sind und einander mit einer kontinuierlich durchgehenden Berührungsfläche berühren, wobei der Außenring mit radial nach innen offenen und im Bereich ihrer Mündung eine Querschnittsverengung aufweisenden Nuten versehen ist und wobei der Führungsring mit radial nach außen vorstehenden Vorsprüngen versehen ist, die in den Nuten aufgenommen sind, wobei unter vollständiger Ausfüllung der Nuten des Außenrings ein Kunststoff unter Druck eingebracht wird.

Ein solches Verfahren sowie eine danach hergestellte Führungshülse sind aus der JP-A-62 141 311 bekannt. Fürhungshülsen gelangen beispielsweise zur Abstützung von Kolbenstangen zur Anwendung, wobei zu beachten ist, daß eine Verbindung zwischen Außenring und Führungsring problematisch ist. Besteht der Führungsring aus einem Kunststoff, der besonders gute Gleiteigenschaften aufweist, wie beispielsweise PTFE, ist eine zuverlässige Festlegung am Außenring, die während einer langen Gebrauchsdauer unverändert erhalten bleibt, nur schwer zu erreichen. In fertigungstechnischer und wirtschaftlicher Hinsicht ist das von Nachteil.

Eine weitere Führungshülse ist aus der US 4,509,870 bekannt. Der Außenring ist mit radial nach innen offenen Nuten versehen, die vom Werkstoff des Führungsring vollständig ausgefüllt sind. Die Nuten weisen eine sich in radialer Richtung nach innen erstreckende Querschnittserweiterung auf.

Der Erfindung liegt die Aufgabe zugrunde, eine Führungshülse der eingangs genannten Art derart weiterzuentwickeln, daß eine sichere Verbindung zwischen dem Außenring und dem Führungsring während einer langen Gebrauchsdauer gewährleistet ist und daß die Führungshülse einfach und kostengünstig herstellbar ist.

Diese Aufgabe wird erfindungsgemäß mit den Merkmalen von Anspruch 1 gelöst.

Im Rahmen der vorliegenden Erfindung ist es vorgesehen, daß ein Führungsring aus Kunststoff in einen Außenring aus einem Hartwerkstoff eingesetzt, erwärmt, unter radialer Aufweitung mit dem Außenring radial verpreßt und anschließend abgekühlt wird. Die Nuten, die mit einer Hinterschneidung versehen sind, bewirken im Vergleich zu Nuten, die rechteckig oder halbkreisförmig und ohne Hinterschneidung ausgebildet sind, daß Kunststoffe zur Herstellung des Führungsringes zur Anwendung gelangen können, die keine adhäsive Verbindung mit dem Außenring eingehen. Bei unterschiedlicher Wärmedehnung von Außenring und Führungsring, die einander kontinuierlich durchgehend berühren, wird durch die Nuten, die im Bereich ihrer Mündung mit einer Querschnittsverengung versehen sind, verhindert, das bei unterschiedlicher radialer Aufweitung und/oder Zusammenziehung eines der beiden einander benachbarten Teile ein radialer Spalt entsteht, der so groß werden kann, daß die beiden Teile nicht mehr miteinander in Eingriff sind. Der Außenring und der Führungsring sind im Bereich der einander zugewandten Oberflächen formschlüssig miteinander verbunden. Eine Relativbeweglichkeit der beiden Teile zueinander wird dadurch sowohl bei einer Führung einer parallel zu der Achse bewegten Stange und/oder bei Führung von rotierenden Wellen zuverlässig vermieden. Darüber hinaus ist von Vorteil, daß auch zu führende Bauteile, die im Laufe der Gebrauchsdauer eine sich vergrößernde Oberflächenrauhigkeit aufweisen, den Außenring und den Führungsring nicht zu trennen vermögen. Die Verbindung eines Kunststoffes mit besonders geringem Reibungskoeffizient mit einem Außenring aus einem Hartwerkstoff ist durch die formschlüssige Verbindung von Außenring und Führungsring miteinander problemlos möglich.

Nach einer ersten Ausgestaltung können die Nuten in Umfangsrichtung verteilt sein und sich parallel zu der Achse erstrecken. Eine derartige Ausgestaltung bietet sich insbesondere dann an, wenn es sich bei dem zu führenden Bauteil um eine in Rotation befindliche Welle handelt. Die Nuten erstrecken sich dann im wesentlichen senkrecht zur Umfangsbewegung der Welle, wobei eine Relativverdrehung von Außenring und Führungsring zueinander durch die sich parallel zur Achse erstreckenden Nuten zuverlässig vermieden wird. Die Vorsprünge, mit denen der Führungsring in die Nuten des Außenringes eingreift, können von der Mündung in radialer Richtung nach außen bevorzugt eine Erstreckung aufweisen, die im wesentlichen der Materialdicke des Führungsringes in Umfangsrichtung zwischen den einander benachbarten Nuten entspricht. Das Verhältnis der radialen Erstreckung der Vorsprünge bezogen auf die Materialdicke des Führungsringes zwischen den einander benachbarten Nuten kann vorteilhafterweise 0,25 bis 2 betragen. Die radiale Erstreckung der Vorsprünge ist abhängig von dem Kunststoff des Führungsringes, der zur Anwendung gelangt. Bei einer vergleichsweise geringen Erstreckung können auch Kunststoffe zur Anwendung gelangen, die sich vergleichsweise schlecht umformen lassen, wobei auch in diesem Falle eine vollständige herstellungsbedingte Ausfüllung der Nuten mit den Vorsprüngen gewährleistet ist.

Nach einer weiteren Ausgestaltung können die Nuten und die Achse einen spitzen Winkel miteinander einschließen. Der dann im wesentlichen spiralförmige Verlauf der Nuten auf der Innenumfangsseite des Außenringes bedingt eine sichere Festlegung des Führungsringes, selbst wenn sich das zu führende Bauteil sowohl translatorisch als auch rotatorisch bewegt.

Darüber hinaus können einander überkreuzende Nuten vorgesehen sein. Die im wesentlichen gitterförmige Innenumfangsfläche des Außenringes und eine ebensolche Außenumfangsfläche des Führungsringes, wobei die Profile von Außenring und Führungsring miteinander in Eingriff sind, bedingen einen Verzahnungseffekt, wobei der Außenring und der Führungsring auch dann relativ unbeweglich zueinander gehalten werden, wenn auf beide Teile relativ entgegengesetzte mechanische Belastungen wirken. Diese können beispielsweise dadurch hervorgerufen werden, daß der Außenring relativ unbeweglich innerhalb eines Gehäuses gehalten ist, während der Führungsring eine hin- und hergehende Stange anliegend umschließt.

Insbesondere, wenn sich die Nuten des Außenringes und die Vorsprünge des Führungsringes parallel zur Achse des Führungsringes erstrecken, können Nuten vorgesehen sein, die in axialem Abstand von zumindest einer Stirnfläche des Außenringes enden. Um zu verhindern, daß sich der Führungsring in beide axiale Richtungen relativ zum Außenring verlagern kann, hat es sich als vorteilhaft bewährt, wenn in Umfangsrichtung aufeinanderfolgende Nuten vorgesehen sind, die abwechselnd in einem axialen Abstand von der einen und von der anderen Stirnfläche des Außenringes enden. Eine formschlüssige Verbindung von Außenring und Führungsring liegen sowohl dann vor, wenn ein rotierendes Bauteil, als auch wenn ein geradlinig hin- und herbewegtes Bauteil geführt werden soll. Dabei ist zu bemerken, daß die Herstellung eines derart ausgebildeten Führungsringes in fertigungstechnischer Hinsicht durch die nur parallel zur Achse verlaufenden Nuten des Außenringes im Vergleich zu einander überkreuzenden Nuten relativ einfach ist.

Die Nuten können gleichmäßig in Umfangsrichtung verteilt sein. Dabei ist es vorgesehen, daß in Abhängigkeit von den jeweiligen Gegebenheiten des Anwendungsfalles zumindest drei Nuten mit entsprechenden Vorsprüngen des Führungsringes in Eingriff sind.

Nach einer weiteren Ausgestaltung können Nuten vorgesehen sein, die sich quer zur Achse erstrecken. Eine derartige Ausgestaltung bedingt eine Sicherung des Führungsringes gegen Axialverschiebungen, bezogen auf den ihn umschließenden Außenring, wenn Bauteile geführt werden, die sich lediglich in einer hin- und hergehenden Bewegung befinden. Dies ist beispielsweise der Fall, wenn das zu führende Bauteil durch eine Kolbenstange eines Kraftfahrzeug-Federbeines gebildet wird.

Der Führungsring kann in axialer Richtung zumindest an einem Ende durch eine einstückig angeformte, die zu führende Stange oder Welle dichtend umschließende, radial nach innen vorstehende Dichtlippe begrenzt sein. Durch die Dichtlippe werden Verunreinigungen, die sich auf der einem abzudichtenden Raum abgewandten Seite befinden, während des Betriebes zuverlässig vom Führungsring ferngehalten. Dichtlippen, die im Bereich der Enden des Führungsringes angeformt sind, bieten insbesondere dann Vorteile, wenn sich das zu führende Bauteil in axialer Richtung hin- und herbewegt und dabei Oberflächenbereiche durch den Führungsring geführt werden, die zuvor Verunreinigungen ausgesetzt waren. Die Dichtlippe, die als Abstreifer ausgebildet ist, verhindert, daß die Verunreinigungen zu einem abrasivem Verschleiß an der Oberfläche des Führungsringes führen und dadurch einen vorzeitigen Ausfall der Führungshülse bedingen.

Die erfindungsgemäße Führungshülse wird nachfolgend anhand der als Anlage beigefügten Zeichnungen weiter verdeutlicht. Diese zeigen:
In Fig. 1 ein erstes Ausführungsbeispiel einer Führungshülse,
in Fig. 2 ein Ausschnitt aus der Führungshülse gemäß Fig. 1 in einer Ansicht von links,
in Fig. 3 den Außenring der Führungshülse aus Fig. 1 als Einzelteil,
in Fig. 4 einen Ausschnitt von dem Außenring aus Fig. 3 in einer Ansicht von links und
in Fig. 5 ein zweites Ausführungsbeispiel einer Führungshülse, bei dem der Führungsring in radialer Richtung innenseitig im Bereich des einen axialen Endes mit einer Dichtlippe versehen ist.

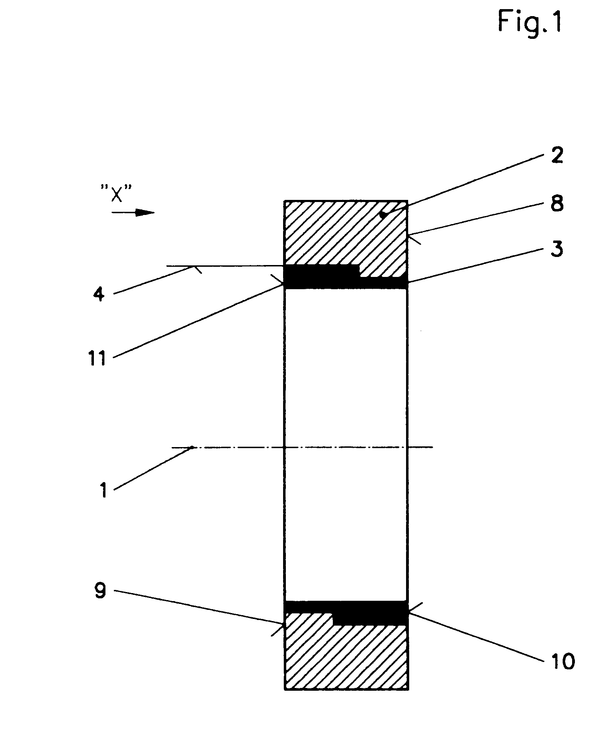

In den Fig. 1 bis 4 ist ein Ausführungsbeispiel einer Führungshülse gezeigt, wie sie beispielsweise zum Führen einer Kolbenstange in Federbeinen von Fahrzeugen zur Anwendung gelangt. Die Führungshülse besteht aus einem Außenring 2 aus einem metallischen Werkstoff, der einen Führungsring 3 aus PTFE außenumfangsseitig umschließt. Der Außenring 2 ist mit sich parallel zu der Achse 1 erstreckenden Nuten 6 versehen, die in Richtung des Führungsrings 3 offen und im Bereich ihrer Mündung 5 mit einer Querschnittsverengung versehen sind. In den Nuten 6 sind radial nach außen vorstehende Vorsprünge 7 aufgenommen, die einstückig ineinander übergehend mit dem Führungsring 3 ausgebildet sind. Die Nuten 6 des Außenringes 2 sind ebenso wie die Vorsprünge 7 des Führungsringes 3 gleichmäßig in Umfangsrichtung verteilt. Die in Umfangsrichtung aufeinanderfolgenden Nuten 6 des Außenringes 2 enden abwechselnd in einem axialen Abstand von der einen 8 und von der anderen Stirnfläche 9 des Außenringes 2. Durch diese Ausgestaltung ist bedingt, daß der Führungsring 3 innerhalb des Außenringes 2 sowohl unter Einwirkung von axialen als auch in Umfangsrichtung wirkende Belastungen sicher in seiner Position gehalten ist. Die Herstellung einer derartigen Führungshülse ist in fertigungstechnischer und wirtschaftlicher Hinsicht durch die sich achsparallel erstreckenden Nuten besonders vorteilhaft. Die Vorsprünge 7 des Führungsringes 3 ergeben sich durch einen Umformungsvorgang. Zunächst wird der Führungsring 3 aus Kunststoff in den Außenring 2 eingesetzt. Zur besseren Verformbarkeit ist der Führungsring 3 erwärmt. Anschließend wird der erwärmte Führungsring 3 in radialer Richtung aufgeweitet, wobei der Kunststoff die Mündungen 5 der Nuten 6 durchdringt und diese ausfüllt. Nach dem anschließenden Abkühlen des Führungsringes 3 wird dieser zuverlässig sowohl in Umfangsrichtung als auch in axialer Richtung innerhalb des Außenringes 2 gehalten. Eine gleichbleibend gute Abstützung der beiden Ringe aufeinander wird durch die hinterschnittenen Nuten 6 des Außenringes 2 bewirkt.

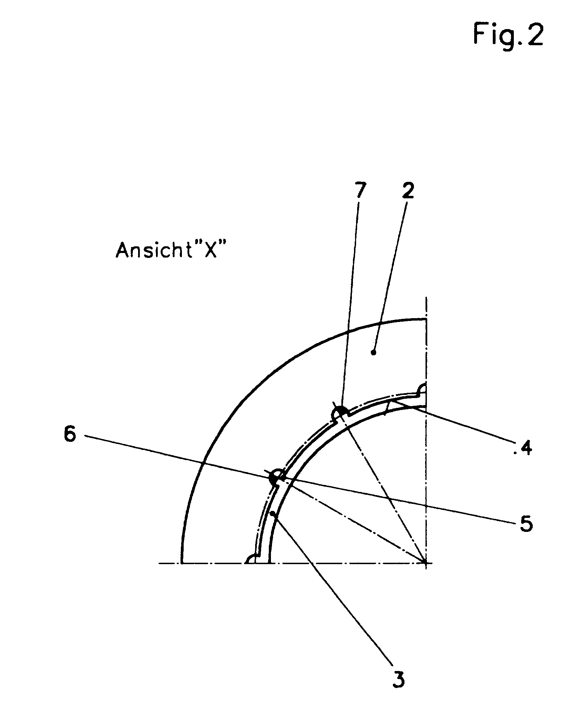

In Fig. 2 ist ein Ausschnitt aus der Ansicht der Führungshülse gemäß Fig. 1 gezeigt, wobei zu erkennen ist, daß die Vorsprünge 7 des Führungsringes 3 die Nuten 6 des Außenringes 2 vollständig ausfüllen. Der Führungsring 3 berührt den Außenring 2 mit einer kontinuierlich durchgehenden Berührungsfläche 4.

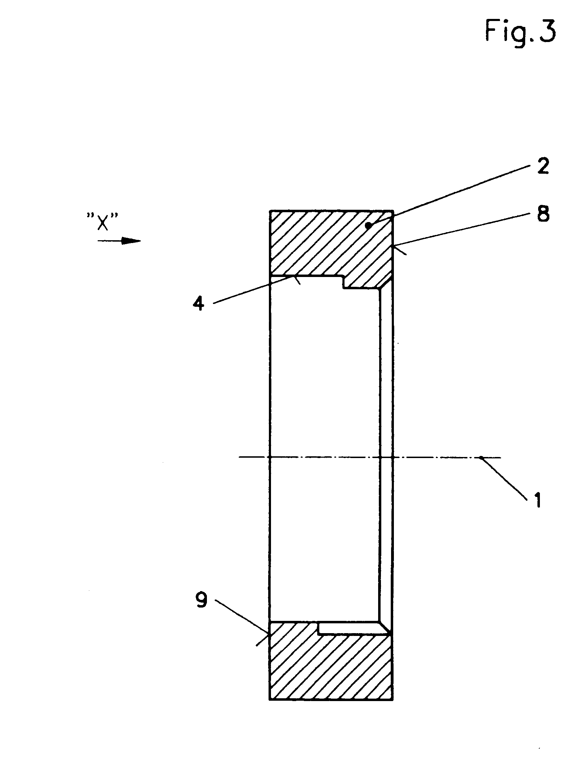

In Fig. 3 ist der Außenring aus Fig. 1 als Einzelteil dargestellt.

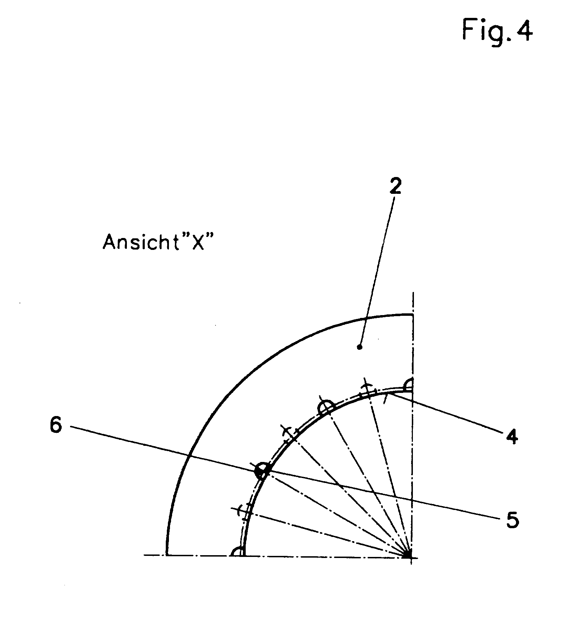

In Verbindung mit Fig. 4 ist zu erkennen, daß die in Umfangsrichtung aufeinanderfolgenden Nuten 6 abwechselnd in einem axialen Abstand von der einen 8 und von der anderen Stirnfläche 9 des Außenrings 2 enden. Die Nuten 6, die axial in Richtung der einen Stirnfläche 8 geöffnet sind, sind in Fig. 4 mit durchbrochenen Linien gezeigt.

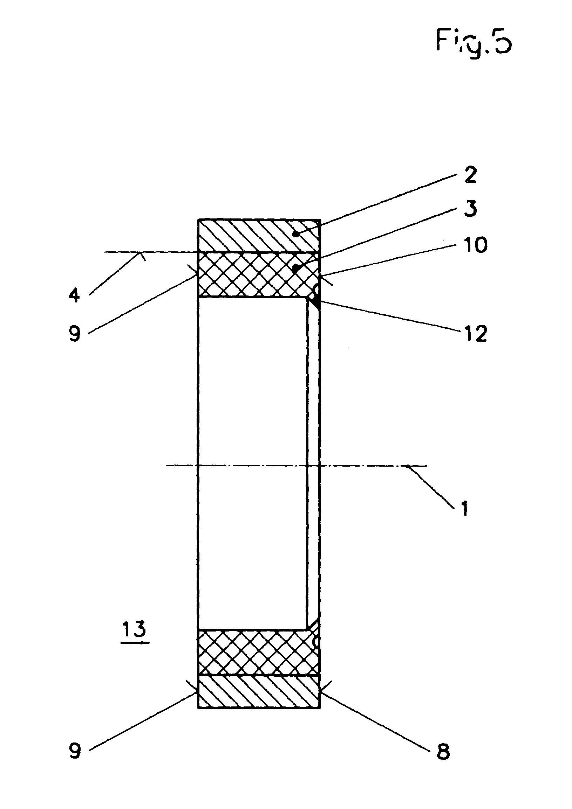

Ein zweites Ausführungsbeispiel ist in Fig. 5 schematisch dargestellt. Im Bereich des Innenumfangs des Führungsringes 3 ist eine einstückig angeformte Dichtlippe 12 vorgesehen, die das zu führende Bauteil umfangsseitig dichtend umschließt. Die Dichtlippe 12 erstreckt sich in radialer Richtung nach innen und ist einstückig mit dem aus Kunststoff bestehenden Führungsring 3 ausgebildet. Eine derartige Ausführung kann beispielsweise dann zur Anwendung gelangen, wenn eine Kolbenstange abgedichtet wird, die in diesem Ausführungsbeispiel rechts von der Dichtlippe 12 Verunreinigungen ausgesetzt ist. Eine Verschiebung der Kolbenstange nach links in Richtung des abgedichteten Raumes, der mit der Bezugsziffer 13 versehen ist, hat durch die Abstreifwirkung der Dichtlippe 12 keinen gebrauchsdauerverringernden Einfluß auf die Innenumfangsfläche des Führungsringes. Abrasiver Verschleiß wird durch die Dichtlippe 12 wirkungsvoll verhindert.

## Patentansprüche

1. Verfahren zur Herstellung einer Führungshülse für eine parallel zu der Achse (1) relativ bewegliche Stange oder Welle, umfassend einen Außenring (2) und einen darin eingesetzten Führungsring (3) aus Kunststoff, wobei der Außen- (2) und der Führungsring (3) aneinander festgelegt sind und einander mit einer kontinuierlich durchgehenden Berührungsfläche (4) berühren, wobei der Außenring (2) mit radial nach innen offenen und im Bereich ihrer Mündung (5) eine Querschnittsverengung aufweisenden Nuten (6) versehen ist und wobei der Führungsring (3) mit radial nach außen vorstehenden Vorsprüngen (7) versehen ist, die in den Nuten (6) aufgenommen sind, wobei unter vollständiger Ausfüllung der Nuten (6) des Außenrings (2) ein Kunststoff unter Druck eingebracht wird, dadurch gekennzeichnet, daß ein Führungsring (3) aus Kunststoff in einen Außenring (2) aus einem Hartwerkstoff eingesetzt, erwärmt, unter radialer Aufweitung mit dem Außenring (2) radial verpreßt und anschließend abgekühlt wird.

2. Verfahren nach Anspruch 1, dadurch gekennzeichnet, daß in Umfangsrichtung verteilte Nuten (6) vorgesehen sind, die sich parallel zu der Achse (1) erstrecken.

3. Verfahren nach Anspruch 1, dadurch gekennzeichnet, daß die Nuten (6) und die Achse (1) einen spitzen Winkel miteinander einschließen.

4. Verfahren nach Anspruch 3, dadurch gekennzeichnet, daß einander überkreuzende Nuten (6) vorgesehen sind.

5. Verfahren nach Anspruch 1 bis 4, dadurch gekennzeichnet, daß Nuten (6) vorgesehen sind, die in axialem Abstand von zumindest einer Stirnfläche (8,9) des Außenringes (2) enden.

6. Verfahren nach Anspruch 1 bis 5, dadurch gekennzeichnet, daß in Umfangsrichtung aufeinanderfolgende Nuten (6) vorgesehen sind, die abwechselnd in einem axialen Abstand von der einen (8) und von der anderen Stirnfläche (9) des Außenringes (2) enden.

7. Verfahren nach Anspruch 1 bis 6, dadurch gekennzeichnet, daß die Nuten (6) gleichmäßig in Umfangsrichtung verteilt sind.

8. Verfahren nach Anspruch 1, dadurch gekennzeichnet, daß Nuten (6) vorgesehen sind, die sich quer zu der Achse (1) erstrecken.

9. Verfahren nach Anspruch 1 bis 8, dadurch gekennzeichnet, daß der Führungsring (3) in axialer Richtung zumindest an einem Ende (10, 11) durch eine einstückig angeformte, die zu führende Stange oder Welle dichtend umschließende, radial nach innen vorstehende Dichtlippe (12) begrenzt ist.

## Claims

1. A process for manufacturing a guide bush for a rod or shaft which can be relatively moved parallel to the axis (1), comprising an outer ring (2) and a plastic guide ring (3) inserted therein, the outer ring (2) and guide ring (3) being secured together and touching each other with a continuous, uninterrupted contact face (4), the outer ring (2) being provided with grooves (6) which are open radially inwards and have a cross-sectional constriction in the region of their mouth (5) and the guide ring (3) being provided with projections (7) which protrude radially outwards and are received in the grooves (6), a plastics material being introduced under pressure as the grooves (6) of the outer ring (2) are completely filled, characterized in that a plastics guide ring (3) is inserted into an outer ring (2) made from a hard material, is heated, is radially pressed together with the outer ring (2) whilst being radially widened, and is then cooled down.

2. A process according to claim 1, characterized in that grooves (6) are provided which are distributed in the peripheral direction and extend parallel to the axis (1) .

3. A process according to claim 1, characterized in that the grooves (6) and the axis (1) form an acute angle with each other.

4. A process according to claim 3, characterized in that mutually intersecting grooves (6) are provided.

5. A process according to any of claims 1 to 4, characterized in that grooves (6) are provided which end at an axial distance from at least one end face (8, 9) of the outer ring (2).

6. A process according to any of claims 1 to 5, characterized in that grooves (6) are provided which succeed one another in the peripheral direction and end alternately at an axial distance from the one (8) and other end face (9) of the outer ring (2).

7. A process according to any one of claims 1 to 6, characterized in that the grooves (6) are evenly distributed in the peripheral direction.

8. A process according to claim 1, characterized in that grooves (6) are provided which extend transversely to the axis (1).

9. A process according to any one of claims 1 to 8, characterized in that the guide ring (3) is delimited in the axial direction, at least at one end (10, 11), by a sealing lip (12) which is moulded on in one piece, encloses in sealing arrangement the rod or shaft to be guided and protrudes radially inwards.

## Revendications

1. Procédé de fabrication d'une douille de guidage pour une tige ou un arbre relativement mobile dans un sens parallèle à l'axe (1), comprenant une bague extérieure (2) et une bague de guidage (3) en matière plastique placée dans celle-ci, la bague extérieure (2) et la bague de guidage (3) étant fixées l'une sur l'autre et se touchant mutuellement avec une surface de contact (4) continue, la bague extérieure (2) étant munie de rainures (6) radialement ouvertes vers l'intérieur et présentant au niveau de leur embouchure (5) une contraction de section, et la bague de guidage (3) étant munie de saillies (7) s'avançant radialement vers l'extérieur, qui sont logées dans les rainures (6), une matière plastique étant introduite sous pression remplissant complètement les rainures (6) de la bague extérieure (2), caractérisé en ce qu'une bague de guidage (3) en matière plastique est placée dans une bague extérieure (2) en matériau dur, est réchauffée, comprimée radialement avec la bague extérieure (2) en s'élargissant radialement et ensuite refroidie.

2. Procédé selon la revendication 1, caractérisé en ce que des rainures (6) réparties dans le sens circonférentiel sont prévues, qui s'étendent parallèlement à l'axe (1).

3. Procédé selon la revendication 1, caractérisé en ce que les rainures (6) et l'axe (1) enferment ensemble un angle aigu.

4. Procédé selon la revendication 3, caractérisé en ce que des rainures (6) se croisant mutuellement sont prévues.

5. Procédé selon l'une des revendications 1 à 4, caractérisé en ce que des rainures (6) sont prévues, qui se terminent à distance axiale d'au moins l'une des faces (8, 9) de la bague extérieure (2).

6. Procédé selon l'une des revendications 1 à 5, caractérisé en ce que des rainures (6) successives dans le sens circonférentiel sont prévues, qui se terminent en alternant à une distance axiale de l'une (8) et de l'autre face (9) de la bague extérieure (2).

7. Procédé selon l'une des revendications 1 à 6, caractérisé en ce que les rainures (6) sont réparties uniformément dans le sens circonférentiel.

8. Procédé selon la revendication 1, caractérisé en ce que des rainures (6) sont prévues, qui s'étendent perpendiculairement à l'axe (1).

9. Procédé selon l'une des revendications 1 à 8, caractérisé en ce que la bague de guidage (3) est limitée dans le sens axial au moins à l'une des extrémités (10, 11) par une lèvre d'étanchéité (12) formée de manière solidaire avec elle, enveloppant la tige ou l'arbre à guider de manière étanche, faisant saillie radialement vers l'intérieur.
